# EUROPÄISCHE PATENTSCHRIFT

(11) **EP 2 115 329 B1**
(45) Veröffentlichungstag und Bekanntmachung des Hinweises auf die Patenterteilung: **20.07.2011**
(21) Anmeldenummer: 08715529.7
(22) Anmeldetag: 04.03.2008
(51) Int. Cl.: F16H 59/02, F16H 59/10, F16H 61/22, F16H 63/48

(54) **BETÄTIGUNGSEINRICHTUNG MIT WÄHLHEBELAKTUATOR**
ACTUATING DEVICE HAVING A SELECTOR LEVER ACTUATOR
DISPOSITIF D'ACTIONNEMENT AVEC ACTIONNEUR DE LEVIER SÉLECTEUR

(30) Priorität: 07.03.2007 DE 102007011359
(43) Veröffentlichungstag der Anmeldung: 11.11.2009
(73) Patentinhaber: ZF Friedrichshafen AG, 88038 Friedrichshafen (DE)
(72) Erfinder: GIEFER, Andreas, 49448 Lemförde (DE); MEYER, Jörg, 49419 Wagenfeld (DE); RAKE, Ludger, 49356 Diepholz (DE)
(86) Internationale Anmeldenummer: PCT/DE2008/000380
(87) Internationale Veröffentlichungsnummer: WO 2008/106950

(56) Entgegenhaltungen:
- EP-A- 1 318 336
- EP-A- 1 464 875
- WO-A-01/59336

## Beschreibung

Die Erfindung betrifft eine Betätigungseinrichtung für ein Gangwechselgetriebe, insbesondere für ein Automatgetriebe mit shift-by-wire-Betätigung, gemäß dem Oberbegriff des Patentanspruchs 1, und wie sie aus dem Dokument EP1318336A bekannt ist.

Gangwechselgetriebe von Kraftfahrzeugen werden üblicherweise mittels einer im Griffbereich des Fahrers angeordneten Betätigungseinrichtung gesteuert bzw. geschaltet. Regehmäßig kommen hierzu Betätigungselemente wie Schalthebel oder Wählhebel zum Einsatz, die beispielsweise zwischen den Frontsitzen des Kraftfahrzeugs angeordnet sind.

Die konstruktiven und ergonomischen Anforderungen an derartige Schalthebel bzw. Wählhebel sind dabei vielfältig. Um beispielsweise dem Fahrer ein realistisches Gefühl der Getriebebetätigung zu vermitteln, wird für gattungsgemäße Betätigungseinrichtungen gefordert, dass dem Fahrer sowohl optische wie auch klare haptische bzw. taktile Rückmeldungen vermittelt werden. Hieraus soll der Fahrer bei der Betätigung des Wählhebels auf den erfolgten Schaltvorgang schließen können, wie auch mit einem Blick oder einem Griff zum Wählhebel intuitiv den momentanen Schaltzustands des Getriebes erfassen können.

In diesem Zusammenhang ist es somit wünschenswert, dem Fahrer anhand der jeweiligen Momentanposition bzw. Winkelstellung des Wählhebels eine klare optische und haptische Rückmeldung über den momentanen Getriebezustand bzw. über die eingelegte Fahrstufe zu vermitteln.

Im Fall einer mechanischen Getriebebetätigung bzw. einer mechanischen Kopplung zwischen Wählhebel und Gangwechselgetriebe - beispielsweise mittels Seilzug oder Gestänge - stimmt die Wählhebelstellung aufgrund der mechanischen Kopplung stets mit der tatsächlichen Getriebestellung überein. Da ferner die Getriebepositionen stabil sind, sind somit auch die Wählhebelpositionen stabil. Der Fahrer kann somit einerseits von der jeweiligen Wählhebelstellung auf den aktuellen Schaltzustand des Getriebes schließen, bzw. anhand der Wählhebelstellung den im Getriebe jeweils eingelegten Gang erkennen, und sich andererseits darauf verlassen, dass die Wählhebelstellung nie vom tatsächlichen Schaltzustand des Getriebes abweicht.

Im Fall der elektrischen Betätigung bzw. der shift-by-wire-Betätigung des Gangwechselgetriebes jedoch existiert keine mechanische Kopplung mehr zwischen dem Betätigungselement in der Fahrgastzelle und dem Kraftfahrzeuggetriebe. Vielmehr erfolgt die Übertragung der Schaltbefehle von der Betätigungseinrichtung zum Kraftfahrzeuggetriebe im Fall der "shift-by-wire"-Getriebe zumeist ausschließlich mittels elektrischer oder elektronischer Signale. Dies gilt teilweise sowohl für moderne Schaltgetriebe, insbesondere jedoch für die aktuellen Generationen der Automatgetriebe, die zumeist komplett aktuatorisch fernbetätigt werden.

Im Fall der shift-by-wire-betätigten Gangwechselgetrieben kann die fehlende mechanische Verbindung zwischen der Getriebeaktuatorik und dem Wählhebel jedoch dazu führen, dass die Wählhebelstellung unter bestimmten Rahmenbedingungen oder im Fehlerfall nicht mehr mit dem Schaltzustand des Getriebes übereinstimmt.

So weisen moderne Automatgetriebe im Allgemeinen eine so genannte Auto-P-Funktion auf, die dafür sorgt, dass beim Verlassen des Fahrzeugs stets die Parksperre im Getriebe eingelegt wird, um so etwa ein Wegrollen des unbeaufsichtigten Fahrzeugs zu unterbinden. Die Auto-P-Funktion, die beispielsweise immer dann in Aktion tritt, wenn der Zündschlüssel abgezogen oder das Fahrzeug verriegelt wird, sorgt mit anderen Worten für das automatische Einlegen der Parksperre unabhängig von der tatsächlich am Wählhebel angewählten Fahrslufe. Die Parksperre wird durch die Auto-P-Funktion des Getriebes bzw. des Fahrzeugs somit auch dann eingelegt, wenn der Wählhebel vom Fahrer tatsächlich beispielsweise in der Neutralstellung oder in einer der Fahrstufenstellungen belassen wurde.

In diesem Fall stimmt jedoch die Wählhebelstellung nicht mehr mit dem tatsächlichen Schaltzustand des Getriebes überein. Bei der Rückkehr zum Fahrzeug, bzw. beim Starten des Fahrzeugs wird anhand der Wählhebelstellung sowohl optisch als auch haptisch somit eine unzutreffende Information an den Fahrer gegeben. Anhand der Wahrnehmung der Wählhebelstellung geht der Fahrer davon aus, dass sich das Getriebe in der Neutralstellung oder in einer Fahrstufenstellung befindet, während im Getriebe hingegen tatsächlich die Parksperre eingelegt ist. Diese Diskrepanz zwischen der Wählhebelstellung und dem Getriebezustand kann somit zu unerwünschten Fehlbedienungen, zu Fehlschlüssen durch den Fahrer und damit auch zu sicherheitskritischen Situationen führen.

Es ist versucht worden, der dargestellten Problematik damit zu begegnen, dass die Wählhebel von shift-by-wire-Gangwechselgetrieben als monostabile Betätigungselemente ausgebildet worden sind. Mit anderen Worten bedeutet dies, dass ein solcher monostabil ausgebildeter Wählhebel nach jeder Betätigung stets wieder in dieselbe Mittelstellung zurückkehrt. Die Rückmeldung über den tatsächlichen Schaltzustand des Getriebes bleibt bei einem monostabilen Wählhebel somit ausschließlich einer separaten Anzeige beispielsweise mittels Leuchtdioden überlassen. Hingegen entfällt bei einem monostabilen Wählhebel die Möglichkeit, dem Fahrer anhand der Wählhebelstellung optische bzw. haptische Rückmeldung über den Schaltzustand des Getriebes zu vermitteln.

Monostabil ausgebildete Betätigungseinrichtungen haben den zusätzlichen Nachteil, dass sich der Fahrer an ein neues Bedienkonzept mit dem stets in die Mittelstellung zurückstrebenden Hebel gewöhnen muss, wobei sich dieses Bedienkonzept erheblich von der traditionellen Getriebebetätigung unterscheidet.

Mit diesem Hintergrund ist es somit die Aufgabe der vorliegenden Erfindung, eine Betätigungseinrichtung für ein Gangwechselgetriebe zu schaffen, mit der die genannten, im Stand der Technik vorhandenen Nachteile überwunden werden. Mit der Erfindung soll dabei ermöglicht werden, dass auch bei shift-by-wire-gesteuerten Gangwechselgetrieben die Wählhebelposition stets den tatsächlichen Schaltzustand des Getriebes widerspiegelt. Insbesondere soll verhindert werden, dass der Wählhebel im Fall der automatisch eingelegten Parksperre irreführenderweise in einer der Fahrstufenstellungen verbleibt, während im Getriebe hingegen tatsächlich die Parksperre eingelegt ist. Auf diese Weise soll eine stets zuverlässige optische und taktile Rückmeldung über den tatsächlichen Schaltzustand des Getriebes realisiert werden.

Diese Aufgabe wird durch eine Betätigungseinrichtung mit den Merkmalen des Patentanspruchs 1 gelöst.

Bevorzugte Ausführungsformen sind Gegenstand der Unteransprüche.

In für sich genommen zunächst bekannter Weise umfasst die Betätigungseinrichtung gemäß der vorliegenden Erfindung einen Wählhebel und eine Übertragungseinrichtung zur Übertragung der Schaltbefehle von der Betätigungseinrichtung zum Kraftfahrzeuggetriebe. Dabei ist der Wählhebel in Übereinstimmung mit dem traditionellen Bedienkonzept als Bedienelement mit stabilen Wählhebelstellungen ausgebildet, und die Betätigungseinrichtung umfasst ferner eine Sperrvorrichtung, mit der der Wählhebel in der Parksperrenstellung verriegelt werden kann. Die Verriegelung des Wählhebels in der Parksperrenstellung dient der Realisierung der insbesondere bei Automatgetrieben üblichen bzw. notwendigen Sicherheitsfunktionen, die häufig als Keylock bzw. Shiftlock bezeichnet werden.

So führt beispielsweise die als sog. Keylock-System bekannte Sicherheitsfunktion beim automatischen Gangwechselgetriebe zu einer Blockierung des Wählhebels in der Position "P" (Parksperre), solange der Zündschlüssel abgezogen ist. Damit soll insbesondere verhindert werden, dass der Wählhebel bereits vor dem Anlassen des Motors in eine der Fahrstufen geschaltet wird, wodurch sich das Fahrzeug bereits beim Anlassen unerwünscht in Bewegung setzen könnte. Ein weiteres Beispiel für eine derartige Sicherheitsfunktion stellt die Shiftlock-Sperre dar, die dazu dient, dass aus Sicherheitsgründen nur bei getretener Bremse aus den Schaltstellungen "P" (Parksperre) und "N" (Neutral) heraus geschaltet werden kann. Dies dient ebenfalls dem Zweck, ein unkontrolliertes Anfahren des Fahrzeugs bereits im Moment des Einlegens einer Fahrstufe zu verhindern.

Erfindungsgemäß jedoch zeichnet sich die Betätigungseinrichtung dadurch aus, dass die Sperrvorrichtung eine Aktuatoreinrichtung umfasst, wobei der Wählhebel mittels der die Aktuatoreinrichtung umfassenden Sperrvorrichtung aus einer beliebigen Fahrstufenstellung in die Parksperrenstellung bewegt werden kann.

Dies ist zunächst einmal konstruktiv vorteilhaft insofern, als die Sperrvorrichtung auf diese Weise eine Doppelfunktion erhält. Die Sperrvorrichtung lässt sich damit sowohl zur Sperrung des Wählhebels in der Parksperrenstellung einsetzen, und übernimmt zudem die zusätzliche Funktion der aktuatorischen Bewegung des Wählhebels aus der jeweiligen Fahrstufenstellung in die Parksperrenstellung im Fall der automatisch eingelegten Parksperre.

Falls somit der Fahrzeugführer das manuelle Einlegen der Parksperre beim Abstellen des Fahrzeugs vergessen hat, so wird durch die Steuerung des Gangwechselgetriebes die Parksperre automatisch eingelegt, nachdem der Zündschlüssel abgezogen bzw. das Fahrzeug verriegelt wurde. Ferner wird der Wählhebel mittels der die Aktuatoreinrichtung umfassenden Sperrvorrichtung aus der zuletzt eingelegten Fahrstufenstellung in die Parksperrenstellung bewegt und dort verriegelt, so dass der tatsächliche Schaltzustand des Getriebes mit der Stellung des Wählhebels schlussendlich übereinstimmt. Auf diese Weise ergibt sich eine unter allen Umständen korrekte Rückmeldung über die eingelegte Parksperre an den Fahrzeugführer, insbesondere auch im Fall der mittels Auto-P-Funktion automatisch durch das Gangwechselgetriebe eingelegten Parksperre.

Zur Verwirklichung der Erfindung ist es dabei zunächst einmal nicht entscheidend, wie die Aktuatoreinrichtung konstruktiv ausgebildet ist, und auf welche Weise die Aktuatoreinrichtung mit der entsprechenden Betätigungskraft zur aktuatorischen Bewegung des Wählhebels aus der Fahrstufenstellung in die Parksperrenstellung versorgt wird. Die Aktuatoreinrichtung umfasst ein mechanisches Kraftübertragungselement zur Kraftübertragung zwischen einem getriebeseitig angeordneten Aktuator und dem Wählhebel.

Dies bedeutet mit anderen Worten, dass die Betätigung der Aktuatoreinrichtung und damit auch die aktuatorische Bewegung des Wählhebels gemäß dieser Ausführungsform durch das Gangwechselgetriebe selbst erfolgt, beispielsweise mittels eines getriebeseitig vorhandenen Aktuators für die Parksperre. Dank dieser Ausführungsform ergibt sich ein besonders einfacher Aufbau der Aktuatoreinrichtung für die Betätigungseinrichtung, da hierbei kein eigener Aktuator mit entsprechender Energieversorgung im Bereich des Wählhebels erforderlich ist. Ferner wird mit dieser Ausführungsform eine hohe Zuverlässigkeit auch beim etwaigen Ausfall elektrischer Systeme gewährleistet, da der Wählhebel gemäß dieser Ausführungsform über das Kraftübertragungselement mechanisch vom Getriebe aus in die Parksperrenstellung bewegt wird, wenn das Getriebe den Auto-P-Befehl ausführt.

Dabei ist das mechanische Kraftübertragungselement vorzugsweise als Seilzug ausgebildet, wodurch sich eine einfache, flexible Verlegung und eine besonders geringe Körperschallübertragung im Vergleich zu einem starren Gestänge oder zu einer geschobenen Drahtbetätigung ergibt.

Nach einer weiteren, bevorzugten Ausführungsform der Erfindung ist vorgesehen, dass die Betätigungsvorrichtung eine Einrichtung zur mechanischen Notbetätigung des Gangwechselgetriebes umfasst, insbesondere zum Lösen der Parksperre beim etwaigen Ausfall der Systeme zur Getriebebetätigung. Dabei erfolgt die Kraftübertragung vom Wählhebel auf das Gangwechselgetriebe im Falle der Notbetätigung über die - die Aktuatoreinrichtung und das mechanische Kraftübertragungselement umfassende - Sperrvorrichtung der Betätigungseinrichtung.

Dank dieser Ausführungsform der Erfindung ergibt sich ein konstruktiv besonders vorteilhafter Mehrfachnutzen der Sperrvorrichtung und somit auch der Aktuatoreinrichtung und des mechanischen Kraftübertragungselements. Denn einerseits kann somit über die Sperrvorrichtung die Verriegelung des Wählhebels in der Parksperrenstellung erfolgen, und andererseits kann im Fall der Notbetätigung eine Kraftübertragung vom Wählhebel über die Sperrvorrichtung auf das Gangwechselgetriebe stattfinden. Die Aktuatoreinrichtung ebenso wie das Kraftübertragungselement werden somit ebenfalls doppelt genutzt, indem über Aktuatoreinrichtung und Kraftübertragungselement einerseits - im Fall des automatischen Einlegens der Parksperrenstellung des Wählhebels - die Kraftübertragung vom Getriebe zum Wählhebel erfolgt, als auch umgekehrt - im Fall der Notbetätigung - die Betätigungskraft vom Wählhebel zum Getriebe übertragen wird.

Nach einer weiteren, ebenfalls bevorzugten Ausführungsform der Erfindung umfasst die Sperrvorrichtung einen Aktuator zur Freigabe des in der Parksperrenstellung gesperrten Wählhebels. Dank dieser Ausführungsform kann die Freigabe des Wäblhebels aus der Parksperrenstellung auf einfache Weise mit der entsprechenden Fahrzeug-Sicherheitslogik verknüpft werden, insbesondere mit der Sensierung der Zündschlüsselstellung bzw. der Bremspedalbetätigung. Dies bedeutet mit anderen Worten, dass in Abhängigkeit davon, ob der Zündschlüssel steckt oder abgezogen ist, bzw. in Abhängigkeit davon, ob der Fahrer das Bremspedal getreten hat, die Sperrvorrichtung des Wählhebels durch die Fahrzeug-Sicherheitslogik in der Parksperrenstellung aus Sicherheitsgründen gesperrt bzw. freigegeben wird.

Gemäß einer weiteren bevorzugten Ausführungsform der Erfindung umfasst die Sperrvorrichtung eine um einen Drehpunkt kippbare Sperrwippe. Dabei ist der Drehpunkt der Sperrwippe seinerseits mittels eines Schwenkhebels schwenkbeweglich mit einem Sockel der Betätigungseinrichtung verbunden. Die Sperrwippe besitzt an einem Ende eine mit dem Wählhebel in Eingriff bringbare erste Sperrkontur und am anderen Ende eine mit der Notentriegelung in Eingriff bringbare zweite Sperrkontur.

Auf diese Weise wird mit einem absoluten Minimum an Bauteilen ermöglicht, dass die Verriegelungswirkung der Sperrwippe auf den Wählhebel auf zwei verschiedene Arten aufgehoben werden kann. So kann entweder die den Wählhebel in der Parksperrenstellung blockierende erste Sperrkontur der Sperrwippe mittels einer Kippbewegung der Sperrwippe um ihren Drehpunkt vom Wählhebel gelöst und der Wählhebel damit freigegeben werden. Die hierzu erforderliche Kippbewegung der Sperrwippe kann beispielsweise durch Drücken des Parksperrenknopfes am Wählhebel eingeleitet werden, bzw. mittels des Aktuators der Sperrvorrichtung erfolgen.

Alternativ kann die am anderen Ende der Sperrwippe angeordnete zweite Sperrkontur mittels einer manuellen Betätigung außer Eingriff mit der Notentriegelung bzw. dem entsprechenden Sockelbereich der Betätigungseinrichtung gebracht werden. Dadurch wird sowohl die zweite Sperrkontur als auch die gesamte Sperrwippe sowie der die Sperrwippe lagernde Schwenkhebel freigegeben. Obwohl die erste Sperrkontur der Sperrwippe in diesem Fall noch im Eingriff mit dem Wählhebel bleibt, lässt sich dabei der Wählhebel jedoch samt Sperrwippe und Schwenkhebel aus der Parksperrenstellung heraus bewegen. Auf diese Weise kann die gewünschte Notbetätigung bzw. insbesondere das manuelle Ausrücken der Parksperre erfolgen, beispielsweise bei einem Ausfall der elektrischen Systeme.

Vorzugsweise ist dabei der Schwenkhebel mit dem mechanischen Kraftübertragungselement zwischen dem Gangwechselgetriebe und dem Wählhebel verbunden. Dies ermöglicht eine zuverlässige aktuatorische Bewegung des Wählhebels aus der Fahrstufenstellung in die Parksperrenstellung. Dabei erfolgt diese aktuatorische Betätigung des Wählhebels ausgehend vom Gangwechselgetriebe - bzw. ausgehend von einem Getriebeaktuator zur Betätigung der Parksperrenklinke im Getriebe - über das mechanische Kraftübertragungselement sowie über Schwenkhebel, Sperrwippe und erste Sperrkontur auf den Wählhebel. Bei dieser Ausführungsform der Erfindung bildet somit der Schwenkhebel zusammen mit der Sperrwippe sowie zusammen mit dem mechanischen Kraftübertragungselement die Aktuatoreinrichtung zur Betätigung des Wählhebels.

Nach einer weiteren Ausführungsform der Erfindung ist vorgesehen, dass der Schwenkhebel ausgehend von seiner Betriebsstellung in Richtung auf seine Parksperrenstellung mittels eines Kraftspeichers federbelastet ist. Dabei ist der Schwenkhebel bei im Gangwechselgetriebe ausgerückter Parksperre durch das mechanische Kraftübertragungselement in seiner Betriebsstellung blockiert, während der Schwenkhebel bei im Gangwechselgetriebe eingelegter Parksperre nicht blockiert und vom mechanischen Kraftübertragungselement somit freigegeben ist.

Dank dieser Ausführungsform kann einerseits der Schwenkhebel noch in seiner Betriebsstellung (in welcher Stellung der Schwenkhebel und die Sperrwippe den Wählhebel noch nicht in der Parksperrenstellung verriegeln) und damit auch der Wählhebel noch in einer Fahrstufenstellung verbleiben, während vom Gangwechselgetriebe andererseits bereits selbsttätig die Parksperrenstellung eingenommen werden kann. Dies ist beispielsweise dann der Fall, wenn der Wählhebel vom Fahrzeugführer noch festgehalten wird, oder durch ein abgestelltes Gepäckstück blockiert ist, während das Gangwechselgetriebe - z.B. aufgrund des schon abgezogenen Zündschlüssels - bereits in die Parksperrenstellung fährt. Sobald im Anschluss daran der Wählhebel losgelassen oder die Blockade des Wählhebels aufgehoben wird, kann Parksperrenstellung bewegen. Diese Ausführungsform der Erfindung steht insbesondere im Dienst der Sicherheit, da somit die Parksperre getriebeseitig selbsttätig auch dann eingelegt werden kann, falls der Wählhebel beispielsweise durch einen Gegenstand in einer Fahrstufenstellung blockiert sein sollte.

Diese Ausführungsform ist vorteilhaft auch insofern, als das Einlegen der Parksperre getriebeseitig zumeist über einen Federspeicher realisiert ist. Soll über diesen Federspeicher nicht nur die Parksperrenklinke eingerückt, sondern auch der Wählhebel in die Parksperrenstellung nachgeführt werden, so würde hierfür getriebeseitig ggf. eine Kraftunterstützung notwendig, da die im Federspeicher des Getriebeaktuators gespeicherte Energie zur zusätzlichen Bewegung des Wählhebels unter Umständen nicht ausreicht. Umsomehr gilt dies, wenn der Wählhebel beim automatischen Einfahren der Parksperre etwa noch festgehalten oder durch einen Gegenstand blockiert wird. Gemäß dieser Ausführungsform besitzt jedoch der Wählhebel in Form des federbelasteten Schwenkhebels einen eigenen Energiespeicher für die Bewegung des Wählhebels in die Parksperrenstellung, und muss damit nicht zusätzlich den Federspeicher des Getriebeaktuators belasten.

Bei der späteren Entriegelung der Parksperre im Getriebe - vor der nächsten Weiterfahrt des Fahrzeugs - lässt sich der Kraftspeicher des Schwenkhebels über das mechanische Kraftübertragungselement zwischen dem getriebeseitigen Aktuator und der Betätigungseinrichtung sodann wieder vorspannen, indem der Schwenkhebel in seiner Parksperrenstellung durch das mechanische Kraftübertragungselement wieder erfasst, in seine Betriebsstellung verbracht und in dieser Stellung durch das mechanische Kraftübertragungselement wieder blockiert wird. Hierzu steht getriebeseitig genügend Betätigungsenergie zur Verfügung, da das Ausrücken der Parksperre im Getriebe zumeist hydraulisch erfolgt. Somit ist für den nächsten aktuatorischen Betätigungsvorgang des Wählhebels im Fall der Aktivierung der Auto-P-Funktion wieder die erforderliche Betätigungsenergie vom Getriebeaktuator auf die Betätigungseinrichtung übertragen und dort gespeichert.

Mit diesem Hintergrund ist es gemäß einer weiteren Ausführungsform der Erfindung vorgesehen, dass die Betätigungseinrichtung eine manuell betätigbare Verriegelungseinrichtung zur Verbindung des mechanischen Kraftübertragungselements mit dem federbelasteten Schwenkhebel aufweist.

Auf diese Weise ergibt sich auch bei der Ausführungsform mit federbelastetem Schwenkhebel eine einfache Realisierung der weiter oben bereits beschriebenen Doppelfunktion des mechanischen Kraftübertragungselements. Das mechanische Kraftübertragungselement steht somit - auch für den Fall des federbelasteten Schwenkhebels - sowohl zur Betätigung des Wählhebels durch das Gangwechselgetriebe mit Kraftrichtung vom Getriebeaktuator zum Wählhebel zur Verfügung, als auch - mit umgekehrter Kraftrichtung vom Wählhebel zum Getriebeaktuator - zur Notbetätigung der Parksperre mittels des Wählhebels.

Für den Fall der Notbetätigung wird dabei der federbelastete Schwenkhebel mittels der Verriegelungseinrichtung mit dem mechanischen Kraftübertragungselement verbunden, und es wird gleichzeitig die Notentriegelung der Sperrwippe ausgelöst. Anschließend kann die Notbetätigung der Parksperre mittels Kraftübertragung vom Wählhebel entlang der Kraftübertragungskette "Wählhebel, erste Sperrkontur, Sperrwippe, Schwenkhebel, Verriegelungseinrichtung, mechanisches Kraftübertragungselement, Getriebeaktuator" auf das Gangwechselgetriebe erfolgen.

Im Folgenden wird die Erfindung anhand lediglich Ausführungsbeispiele darstellender Zeichnungen näher erläutert. Es zeigt:
- **Fig. 1**: in schematischer Seitenansicht eine Ausführungsform einer Betätigungseinrichtung gemäß der vorliegenden Erfindung;
- **Fig. 2**: in einer **Fig. 1** entsprechenden Darstellung und Ansicht nochmals die Betätigungseinrichtung gemäß **Fig. 1** mit noch gesperrtem Wählhebel und gesperrter Notentriegelung;
- **Fig. 3**: in einer **Fig. 1** und **2** entsprechenden Darstellung und Ansicht die Betätigungseinrichtung gemäß **Fig. 1** und **2** beim Öffnen der Sperrwippe durch den Magnetaktuator;
- **Fig. 4**: in einer **Fig. 1** bis **3** entsprechenden Darstellung und Ansicht die Betätigungseinrichtung gemäß **Fig. 1** bis **3** während des Einlegens einer Fahrstufe am Wählhebel;
- **Fig. 5**: in einer **Fig. 1** bis **4** entsprechenden Darstellung und Ansicht die Betätigungseinrichtung gemäß **Fig. 1** bis **4** beim Ausrücken der Parksperre durch den Getriebeaktuator;
- **Fig. 6**: in einer **Fig. 1** bis **5** entsprechenden Darstellung und Ansicht die Betätigungseinrichtung gemäß **Fig. 1** bis **5** vor der Einleitung der automatischen Wählhebelrückführung durch den Getriebeaktuator;
- **Fig. 7**: in einer **Fig. 1** bis **6** entsprechenden Darstellung und Ansicht die Betätigungseinrichtung gemäß **Fig. 1** bis **5** bei der automatischen Wählhebelrückführung durch den Getriebeaktuator;
- **Fig. 8**: in einer **Fig. 1** bis **7** entsprechenden Darstellung und Ansicht die Betätigungseinrichtung gemäß **Fig. 1** bis **7** beim Auslösen der Notentriegelung für die Parksperre;
- **Fig. 9**: in einer **Fig. 1** bis **8** entsprechenden Darstellung und Ansicht die Betätigungseinrichtung gemäß **Fig. 1** bis **8** beim manuellen Ausrücken der Parksperre über den Seilzug;
- **Fig. 10**: in schematischer Seitenansicht eine weitere Ausführungsform einer Betätigungseinrichtung gemäß der vorliegenden Erfindung;
- **Fig. 11**: in einer **Fig. 10** entsprechenden Darstellung und Ansicht nochmals die Betätigungseinrichtung gemäß **Fig. 10** mit noch gesperrtem Wählhebel und gesperrter Notentriegelung;
- **Fig. 12**: in einer **Fig. 10** und **11** entsprechenden Darstellung und Ansicht die Betätigungseinrichtung gemäß **Fig. 10** **und** **11** beim Öffnen der Sperrwippe durch den Magnetaktuator;
- **Fig. 13**: in einer **Fig. 10** bis **12** entsprechenden Darstellung und Ansicht die Betätigungseinrichtung gemäß **Fig. 10** bis **12** während des Einlegens einer Fahrstufe am Wählhebel und beim Ausrücken der Parksperre durch den Getriebeaktuator;
- **Fig. 14**: in einer **Fig. 10** bis **13** entsprechenden Darstellung und Ansicht die Betätigungseinrichtung gemäß **Fig. 10** bis **13** vor der Einleitung der automatischen Wählhebelrückführung durch den Getriebeaktuator;
- **Fig. 15**: in einer **Fig. 10** bis **14** entsprechenden Darstellung und Ansicht die Betätigungseinrichtung gemäß **Fig. 10** bis **14** beim automatischen Einlegen der Parksperre; und
- **Fig. 16**: in einer **Fig. 10** bis **15** entsprechenden Darstellung und Ansicht die Betätigungseinrichtung gemäß **Fig. 10** bis **15** beim Auslösen der Notentriegelung für die Parksperre.

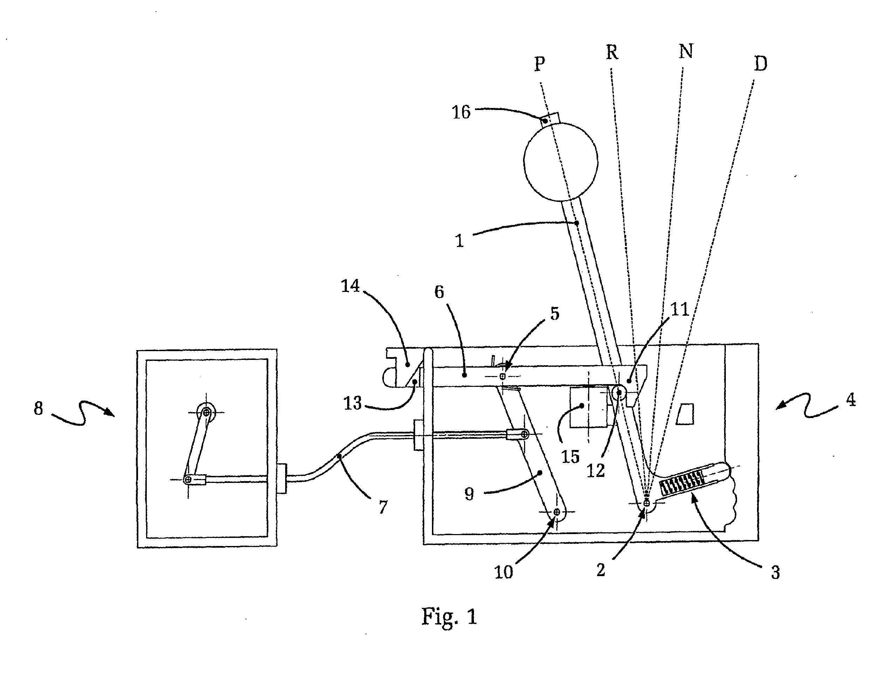

Fig. 1 zeigt in einer höchst schematisch ausgeführten seitlichen Ansicht eine Ausführungsform für eine erfindungsgemäße Betätigungseinrichtung.

Man erkennt zunächst einmal einen Wählhebel 1, der über einen Drehpunkt 2 sowie mittels einer federbelasteten Rastierung 3 zwischen verschiedenen Wählhebelstellungen bzw. Fahrstufen P, R, N, D bewegbar in einem Gehäusesockel 4 der Betätigungseinrichtung angeordnet ist.

Die dargestellte Betätigungseinrichtung besitzt ferner eine Sperrvorrichtung, mit der der Wählhebel 1 in der Parksperrenstellung P verriegelt werden kann. Die Sperrvorrichtung umfasst bei der dargestellten Ausführungsform eine in einem Drehpunkt 5 federbelastet gelagerte Sperrwippe 6 sowie einen mittels eines Seilzugs 7 mit der Schaltwelle bzw. dem Getriebeaktuator 8 eines (nicht dargestellten) Gangwechselgetriebes verbundenen Schwenkhebel 9, der seinerseits wiederum schwenkbar über einen weiteren Drehpunkt 10 mit dem Gehäusesockel 4 der Betätigungseinrichtung verbunden ist.

Die Sperrwippe 6 besitzt eine erste Sperrkontur 11, die mit einem am Wählhebel 1 angeordneten Sperrnocken 12 in Eingriff bringbar ist, sowie eine als Ausnehmung ausgebildete zweite Sperrkontur 13, die mit einer am Gehäusesockel 4 schwenkbar angeordneten Notentriegelungsklappe 14 in Eingriff bringbar ist. Zur Entriegelung der Sperrwippe 6 umfasst die dargestellte Betätigungseinrichtung einen im Ausführungsbeispiel elektromagnetischen Aktuator 15, der sich über den am Wählhebel 1 angeordneten Taster 16 aktivieren lässt.

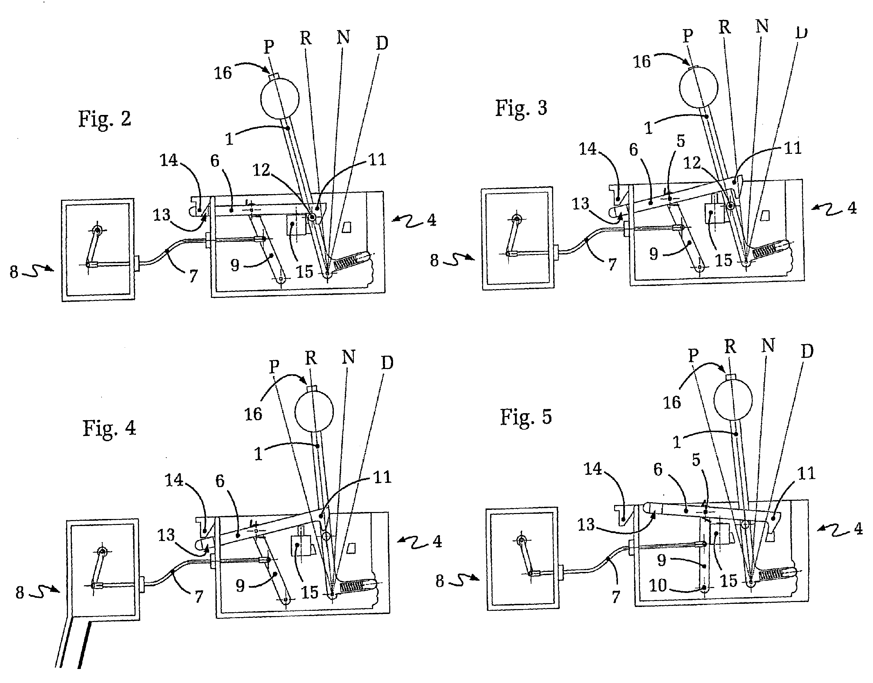

In den **Fig. 2** bis **9** sind die verschiedenen Abläufe bei der Bedienung der Betätigungseinrichtung aus **Fig. 1** im einzelnen dargestellt. Dabei entspricht die Darstellung von **Fig. 2** nochmals der Ausgangsstellung der Betätigungseinrichtung, wie sie auch in **Fig. 1** dargestellt ist. Der Wählhebel 1 befindet sich in der Parksperrenstellung und die Schaltwelle bzw. der Getriebeaktuator 8 des Gangwechselgetriebes sind in Parksperrenposition, wobei letzteres bedeutet, dass im Getriebe die Parksperre eingelegt ist.

Der Zündschlüssel des Fahrzeugs sei abgezogen, weshalb der Wählhebel 1 - infolge des Keylock-Systems des Kraftfahrzeugs - mittels der Sperrwippe 6 in der Parksperrenstellung verriegelt ist. Hierzu hintergreift die Sperrwippe 6 mittels ihrer ersten Sperrkontur 11 den am Wählhebel 1 angeordneten Sperrnocken 12. Gleichzeitig greift die Notentriegelungsklappe 14 in die als Ausnehmung ausgebildete zweite Sperrkontur 13 der Sperrwippe 6 ein und verriegelt die Sperrwippe 6 auf diese Weise mit dem Gehäusesockel 4 der Betätigungseinrichtung. Der Wählhebel 1 lässt sich gemäß der Darstellung von Fig. 2 somit nicht aus der Parksperrenstellung herausbewegen.

Das Lösen der Parksperre im Normalbetrieb ist in den **Fig. 3** bis **5** dargestellt. Hierzu ist am Fahrzeug zunächst einmal die Zündung einzuschalten und das Bremspedal zu treten, um auf diese Weise sowohl die Keylock- als auch die Shiftlock-Sperre der Getriebe-Sicherheitslogik zu lösen, die ein unbeabsichtigtes Aufheben der Parksperre bzw. Bewegen des Fahrzeugs verhindern sollen.

Anschließend wird gemäß **Fig. 3** vom Fahrer der Taster 16 am Wählhebel 1 betätigt, wodurch der elektromagnetische Aktuator 15 aktiviert und auf diese Weise die Sperrwippe 6 um den am Schwenkhebel 9 angeordneten Drehpunkt 5 verschwenkt bzw. angehoben wird. Hierdurch gibt die erste Sperrkontur 11 der Sperrwippe 6 den Sperrnocken 12 des Wählhebels 1 frei, wonach der Wählhebel 1 aus der Parksperrenstellung heraus in eine der Fahrstufenstellungen R, N oder D bewegt werden kann.

Letzteres ist in **Fig. 4** dargestellt. Der Wählhebel 1 wurde aus der Parksperrenstellung in die Fahrstufenstellung R bewegt. Die Stellungen von Schaltwelle bzw. Getriebeaktuator 8 am Getriebe wie auch die Stellungen der Sperrwippe 6, des Schwenkhebels 9 und des elektromagnetischen Aktuators 15 sind zunächst noch unverändert.

Die (nicht dargestellte) Sensorik des Wählhebels 1 bzw. der Betätigungseinrichtung hat jedoch den Schaltbefehl von P nach R registriert und an die fietrieheaktuatorik übermittelt. Demzufolge wird im Getriebe die entsprechende Fahrstufe eingelegt, wobei der Getriebeaktuator 8 jedoch zuvor die Parksperrenklinke im Getriebe löst, was zumeist hydraulisch geschieht.

Nach dem dergestalt aktuatorischen Lösen der Parksperre ergibt sich die in **Fig. 5** dargestellte Situation. Die Getriebeschaltwelle bzw. der Getriebeaktuator 8 hat entsprechend der ausgerückten Parksperre ihre bzw. seine Stellung dergestalt verändert, dass hierdurch eine Betätigung des Seilzugs 7 und damit ein Verschwenken des Schwenkhebels 9 samt der mit dem Schwenkhebel 9 verbundenen Sperrwippe 6 um den Drehpunkt 10 erfolgt. Etwa gleichzeitig sorgt die Getriebesteuerung für die Deaktivierung des elektromagnetischen Aktuators 15 und damit für ein Abkippen der Sperrwippe 6 im Uhrzeigersinn um den Drehpunkt 5, wodurch sich die Betriebsstellung von Schwenkhebel 9 und Sperrwippe 6 gemäß **Fig. 5** ergibt, welche Schwenkhebel 9 und Sperrwippe 6 während des normalen Fahrbetriebs des Kraftfahrzeugs beibehalten.

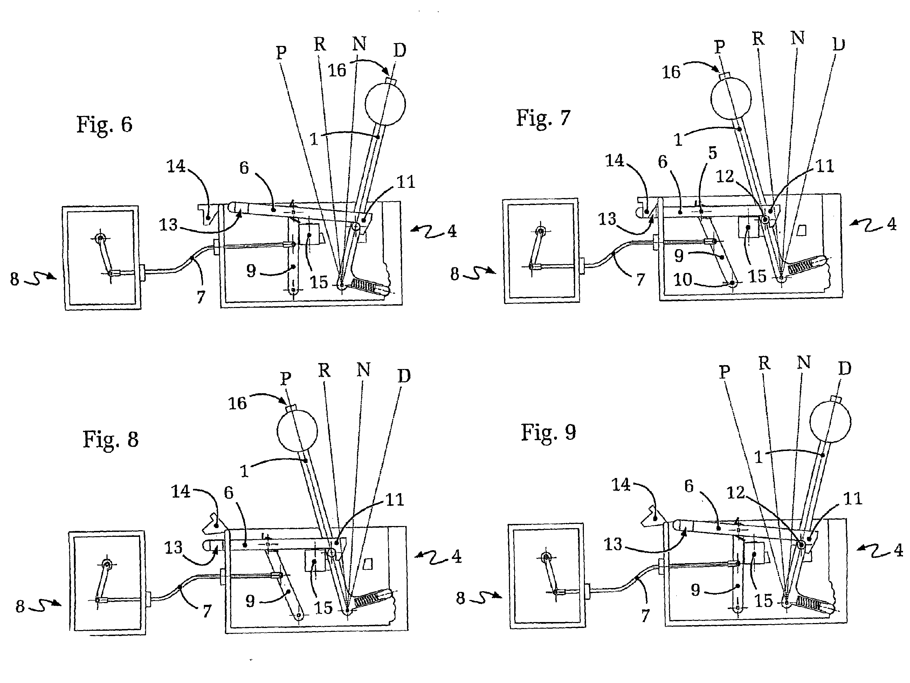

In den **Fig. 6** und **7** sind die Abläufe bei der automatischen Aktivierung der Parksperre ("Auto-P") dargestellt. Der Wählhebel 1 befindet sich gemäß der Darstellung von **Fig. 6** zunächst (beispielsweise) noch in der Fahrstufenstellung D. Getriebeaktuator 8, Seilzug 7, Schwenkhebel 9 und Sperrwippe 6 befinden sich gemäß **Fig. 6** noch unverändert in der Betriebsstellung, wie auch in **Fig. 5** dargestellt.

Anschließend werde das Fahrzeug abgestellt und vom Fahrer verlassen, wobei jedoch das manuelle Einlegen der Parksperre versäumt worden sei. Die Getriebesteuerung veranlasst daher gemäß der Darstellung in **Fig. 7** die automatische Aktivierung der Parksperre. Beim Einfahren der Parksperrenklinke verändert sich dementsprechend die Stellung der Getriebeschaltwelle bzw. des Getriebeaktuators 8 am Gangwechselgetriebe. Hierdurch erfolgt jedoch auch eine (ziehende) Betätigung des Seilzugs 7 und damit ein Verschwenken des Schwenkhebels 9 um dessen Drehpunkt 10 zeichnungsbezogen nach links.

Dabei nimmt der Schwenkhebel 9 die mit dem Schwenkhebel 9 bei 5 verbundene Sperrwippe 6 mit, und bewegt über die erste Sperrkontur 11 der Sperrwippe 6 sowie über den Sperrnocken 12 auf diese Weise auch den Wählhebel 1 zeichnungsbezogen nach links, bis der Wählhebel 1 die Parksperrenstellung erreicht. Gleichzeitig rastet die zweite Sperrkontur 13 der Sperrwippe 6 in die am Gehäusesockel 4 angeordnete Notentriegelungsklappe 14 ein, wodurch die Anordnung aus Sperrwippe 6, Schwenkhebel 9, Wählhebel 1 sowie Seilzug 7 und Getriebeaktuator 8 in der Position gemäß **Fig. 7** **-** die auch wieder der Ausgangsstellung gemäß **Fig. 1** und **2** entspricht - verriegelt werden.

Anschließend kann die Parksperre im Normalbetrieb wieder gelöst werden, wie oben anhand der **Fig. 3** bis 5 und der zugehörigen Beschreibung dargestellt.

Falls die Parksperre, beispielsweise bei einem Ausfall der elektrischen Systeme des Kraftfahrzeugs, sich nicht mehr auf die übliche Weise durch Einschalten der Zündung, Treten des Bremspedals und Druck auf den Taster 16 am Wählhebel 1 mit anschließender Bewegung des Wählhebels 1 aus der Parksperrenstellung in eine Fahrstufenstellung lösen lassen sollte, so ermöglicht die dargestellte Betätigungseinrichtung auch eine Notentriegelung der Parksperre. Dies ist in den **Fig. 8** und **9** dargestellt.

Sollten elektrische Systeme des Kraftfahrzeugs und somit insbesondere die Verschwenkung und Entriegelung der Sperrwippe 6 mittels des elektromagnetischen Aktuators 15 versagen, so kann die Sperrwippe 6 auch von Hand mechanisch entriegelt werden. Hierzu wird die schwenkbar am Gehäusesockel 4 der Betätigungseinrichtung angeordnete Notentriegelungsklappe 14 angehoben, wodurch die Notentriegelungsklappe 14 außer Eingriff mit der als Ausnehmung ausgebildeten zweiten Sperrkontur 13 der Sperrwippe 6 gerät, wie in **Fig. 8** dargestellt.

Anschließend lässt sich der Wählhebel 1 aus der Parksperrenstellung heraus in eine der Fahrstufenstellungen bewegen, wie in **Fig. 9** dargestellt. Dabei folgen aufgrund des unveränderten Eingriffs der ersten Sperrkontur 11 der Sperrwippe 6 mit dem Sperrnocken 12 am Wählhebel 1 sowohl die Sperrwippe 6, der Schwenkhebel 9, der Seilzug 7 als auch die Getriebeschaltwelle bzw. der Getriebeaktuator 8 dieser manuellen Schwenkbewegung des Wählhebels 1.

Auf diese Weise wird die Parksperrenklinke im Getriebe somit rein mechanisch über die Wirkungskette "Wählhebel, Sperrwippe, Schwenkhebel, Seilzug, Getriebeschaltwelle" ausgerückt, und das Fahrzeug kann somit wieder bewegt, beispielsweise abgeschleppt werden.

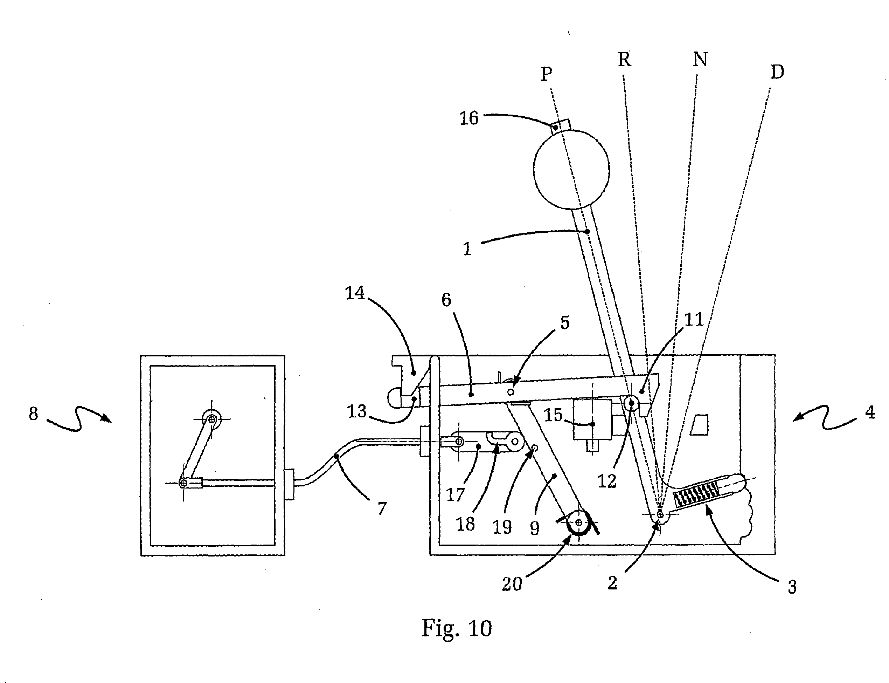

In **Fig. 10** ist eine weitere Ausführungsform einer Betätigungseinrichtung gemäß der vorliegenden Erfindung dargestellt.

Man erkennt wieder den Wählhebel 1, der über den Drehpunkt 2 und die federbelastete Rastierung 3 zwischen verschiedenen Wählhebelstellungen bzw. Fahrstufen P, R, N, D bewegbar im Gehäusesockel 4 der Betätigungseinrichtung angeordnet ist.

Ferner ist auch bei dieser Ausführungsform eine Sperrvorrichtung zur Verriegelung des Wählhebels 1 in der Parksperrenstellung P vorhanden. Die Sperrvorrichtung umfasst bei der dargestellten Ausführungsform wieder die im Drehpunkt 5 gelagerte Sperrwippe 6 sowie den mittels Seilzug 7 mit der Schaltwelle bzw. dem Getriebeaktuator 8 des Gangwechselgetriebes in Verbindung stehenden Schwenkhebel 9.

Die Sperrwippe 6 besitzt wieder eine erste Sperrkontur 11, die mit dem am Wählhebel 1 angeordneten Sperrnocken 12 in Eingriff bringbar ist, ebenso wie die als Ausnehmung ausgebildete zweite Sperrkontur 13, die mit der am Gehäusesockel 4 schwenkbar angeordneten Notentriegelungsklappe 14 in Eingriff bringbar ist. Zur Entriegelung der Sperrwippe 6 umfasst die dargestellte Betätigungseinrichtung wieder den Magnetaktuator 15, der sich über den am Wählhebel 1 angeordneten Taster 16 aktivieren lässt.

Im Unterschied zu der Ausführungsform gemäß **Fig. 1** bis **9** ist bei der Ausführungsform gemäß **Fig. 10** der Seilzug 7 nicht fest am Schwenkhebel 9 angelenkt. Vielmehr endet der Seilzug 7 hier in einem Druckstück 17, welches einen schwenkbaren Verriegelungshaken 18 trägt. Dabei ist der Verriegelungshaken 18 mit einem am Schwenkhebel 9 angeordneten Verriegelungsvorsprung 19 in Eingriff bringbar. Ferner ist der Schwenkhebel 9 bei der Ausführungsform gemäß **Fig. 10** mittels einer Schraubenfeder 20 im Gegenuhrzeigersinn mit Federkraft beaufschlagt.

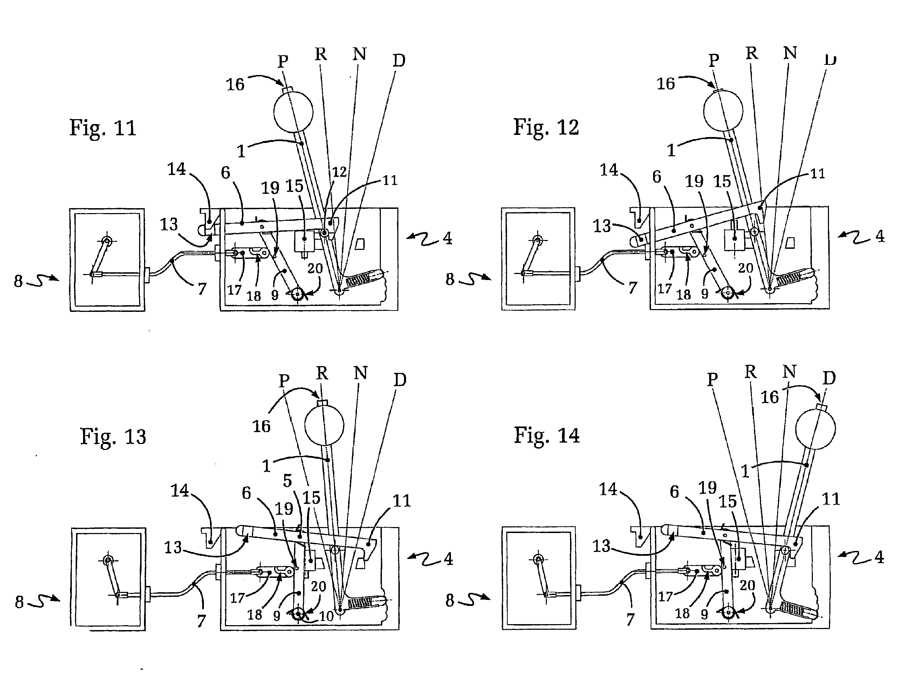

In den **Fig. 11** bis **16** sind die Abläufe bei der Bedienung der Betätigungseinrichtung gemäß **Fig. 10** im einzelnen dargestellt. Dabei entspricht die Darstellung von **Fig. 11** der Ausgangsstellung der Betätigungseinrichtung, wie sie auch in **Fig. 10** dargestellt ist. Der Wählhebel 1 befindet sich dabei gemäß **Fig. 11** zunächst wieder in der Parksperrenstellung und die Schaltwelle bzw. der Getriebeaktuator 8 des Gangwechselgetriebes sind ebenfalls in Parksperrenposition, wobei letzteres bedeutet, dass im Getriebe die Parksperrenklinke eingelegt ist.

Der Zündschlüssel des Fahrzeugs sei dabei wieder abgezogen, weshalb der Wählhebel 1 mittels der Sperrwippe 6 zunächst in der Parksperrenstellung verriegelt ist. Hierzu hintergreift die Sperrwippe 6 mittels ihrer ersten Sperrkontur 11 den am Wählhebel 1 angeordneten Sperrnocken 12. Gleichzeitig greift die Notentriegelungsklappe 14 wieder in die als Ausnehmung ausgebildete zweite Sperrkontur 13 der Sperrwippe 6 ein und verriegelt die Sperrwippe 6 auf diese Weise mit dem Gehäusesockel 4 der Betätigungseinrichtung. Der Wählhebel 1 ist gemäß der Darstellung von **Fig. 11** somit in der Parksperrenstellung mechanisch verriegelt.

Das Lösen der Parksperre im Normalbetrieb ist in den **Fig. 12** und **13** dargestellt. Zum Lösen der Parksperre ist am Fahrzeug zunächst einmal wieder die Zündung einzuschalten und das Bremspedal zu treten, um auf diese Weise die Keylock- und die Shiftlock-Sperre zu lösen, die ein unbeabsichtigtes Aufheben der Parksperre bzw. Bewegen des Fahrzeugs verhindern sollen.

Anschließend wird gemäß **Fig. 12** vom Fahrer wieder der Taster 16 am Wählhebel 1 betätigt, wodurch der elektromagnetische Aktuator 15 aktiviert und damit die Sperrwippe 6 um den am Schwenkhebel 9 angeordneten Drehpunkt 5 verschwenkt wird. Hierdurch gibt die erste Sperrkontur 11 der Sperrwippe 6 den Sperrnocken 12 des Wählhebels 1 frei, wonach der Wählhebel 1 aus der Parksperrenstellung heraus in eine der Fahrstufenstellungen R, N oder D bewegt werden kann.

In der Darstellung gemäß **Fig. 13** wurde der dergestalt entriegelte Wählhebel 1 bereits aus der Parksperrenstellung in eine Fahrstufenstellung bewegt. Der damit verbundene Schaltbefehl von P nach R wurde von der (nicht dargestellten) Sensorik der Betätigungseinrichtung registriert und an die Getriebeaktuatorik übermittelt. Demzufolge wurde im Getriebe auch bereits die korrespondierende Fahrstufe eingelegt, und durch den Getriebeaktuator 8 des Getriebes wurde die Parksperrenklinke im Getriebe hydraulisch gelöst.

Beim Ausrücken der Parksperre bzw. beim Einlegen der Fahrstufe ändert sich jedoch auch die Stellung der Getriebeschaltwelle bzw. des Getriebeaktuators 8, wodurch wiederum eine Betätigung des Seilzugs 7 erfolgt. Aufgrund der Betätigung des Seilzugs 7 wird das Druckstück 17 zeichnungsbezogen nach rechts bewegt, weshalb aufgrund der Anlage des Druckstücks 17 am Schwenkhebel 9 auch der Schwenkhebel 9 samt der Sperrwippe 6 um den Drehpunkt 10 nach rechts verschwenkt, und dabei auch die Schraubenfeder 20 vorgespannt wird. Zum Vorspannen der Schraubenfeder 20 steht genügend Kraft bzw. Betätigungsenergie zur Verfügung, da die Parksperrenklinke bei modernen Automatgetrieben zumeist hydraulisch ausgerückt wird. Gleichzeitig wird durch die Getriebesteuerung der elektromagnetische Aktuator 15 deaktiviert, wodurch die Sperrwippe 6 im Uhrzeigersinn um den Drehpunkt 5 abkippt. Auf diese Weise ergibt sich die Betriebsstellung der Sperrwippe 6 und des Schwenkhebels 9 gemäß **Fig. 13****,** wobei Sperrwippe 6 und Schwenkhebel 9 ihre Betriebsstellung gemäß **Fig. 13** während des normalen Fahrbetriebs des Kraftfahrzeugs beibehalten.

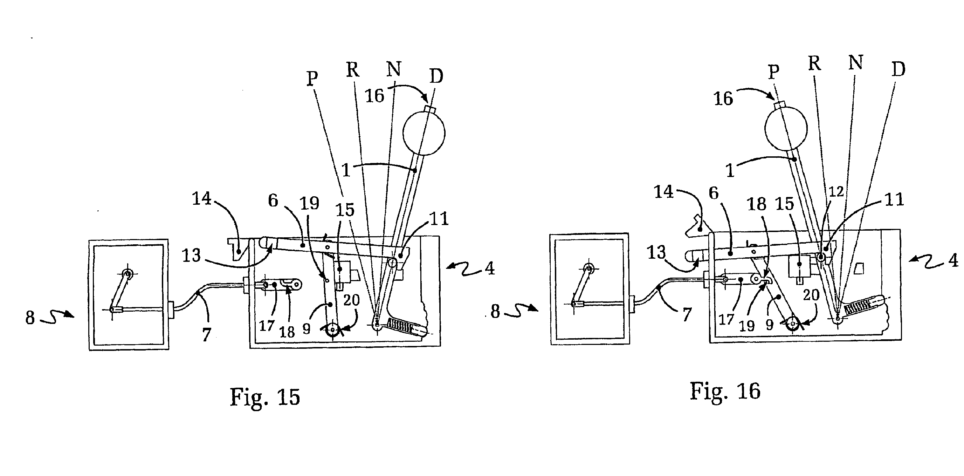

In den **Fig. 14** und **15** sind die Abläufe bei der automatischen Aktivierung der Parksperre ("Auto-P") für diese Ausführungsform der Betätigungseinrichtung dargestellt. Der Wählhebel 1 befinde sich gemäß der Darstellung von **Fig. 14** zunächst noch in der Fahrstufenstellung D. Getriebeaktuator 8, Seilzug 7, Schwenkhebel 9 und Sperrwippe 6 befinden sich gemäß **Fig. 14** noch unverändert in der Betriebsstellung, wie auch in **Fig. 13** dargestellt.

Anschließend werde das Fahrzeug vom Fahrer abgestellt und verlassen, wobei der Fahrer jedoch das manuelle Einlegen der Parkspcrrc versäumt habe. Die Getriebesteuerung veranlasst daher gemäß der Darstellung in **Fig. 15** die automatische Aktivierung der Parksperre. Beim dabei erfolgenden Einfahren der Parksperrenklinke verändert sich dementsprechend die Stellung der Getriebeschaltwelle bzw. des Getriebeaktuators 8 am Gangwechselgetriebe. Hierdurch erfolgt eine ziehende Betätigung des Seilzugs 7, wodurch das Druckstück 17 zeichnungsbezogen nach links bewegt und von seiner Anlage am Schwenkhebel 9 entfernt wird.

Man erkennt, dass - im Unterschied zur Ausführungsform gemäß **Fig. 1** bis **9** **-** die Getriebesteuerung hier somit die Auto-P-Funktion auslösen und automatisch die Parksperre am Getriebe einlegen kann selbst dann, wenn der Wählhebel 1 noch in einer Fahrstufenstellung festgehalten oder in dieser Stellung beispielsweise durch einen Gegenstand blockiert sein sollte. Wird die Blockade des Wählhebels 1 später aufgehoben, so kann der Wählhebel 1 aufgrund der Federbelastung des Schwenkhebels 9 durch die zuvor getriebeaktuatorisch vorgespannte Schraubenfeder 20 über die Wirkungskette "Schraubenfeder, Schwenkhebel, Sperrwippe, erste Sperrkontur" nachträglich in die Parksperrenstellung zurückfallen.

Gleichzeitig rastet wieder die zweite Sperrkontur 13 der Sperrwippe 6 in die am Gehäusesockel 4 angeordnete Notentriegelungsklappe 14 ein, wodurch die bewegliche Anordnung aus Sperrwippe 6, Schwenkhebel 9, Wählhebel 1 sowie Seilzug 7 und Getriebeaktuator 8 im Anschluss an die Situation gemäß **Fig. 15** wieder die Ausgangsstellung gemäß **Fig. 10** und **11** erreicht und in dieser Position verriegelt wird.

Die Entriegelung der Parksperre im Normalbetrieb kann sodann von neuem erfolgen, wie oben anhand der Beschreibung zu **Fig. 12** und **13** dargestellt.

Falls sich die Parksperre, insbesondere bei einem Ausfall elektrischer Systeme des Kraftfahrzeugs, nicht mehr auf die übliche Weise durch Einschalten der Zündung, Treten des Bremspedals und Druck auf den Taster 16 am Wählhebel 1 mit anschließender Bewegung des Wählhebels 1 aus der Parksperrenstellung heraus lösen lassen sollte, so ermöglicht auch die Betätigungseinrichtung gemäß **Fig. 10** bis **16** eine Notentriegelung der Parksperre, wie in **Fig. 16** dargestellt.

Im Fall des Versagens der aktuatorischen Verschwenkung und damit Entriegelung der Sperrwippe 6 mittels des elektromagnetischen Aktuators 15 kann die Sperrwippe 6 auch hier wieder von Hand mechanisch entriegelt werden. Hierzu wird die schwenkbar am Gehäusesockel 4 der Betätigungseinrrichtung angeordnete Notentriegelungsklappe 14 angehoben, wodurch die Notentriegelungsklappe 14 außer Eingriff mit der als Ausnehmung ausgebildeten zweiten Sperrkontur 13 der Sperrwippe 6 gerät, wie in **Fig. 8** dargestellt Gleichzeitig wird der am Druckstück 17 angeordnete Verriegelungshaken 18 in Eingriff mit dem am Schwenkhebel 9 angeordneten Verriegelungsvorsprung 19 gebracht.

Anschließend lässt sich gemäß der Darstellung von **Fig. 16** der Wählhebel 1 aus der Parksperrenstellung heraus in eine der Fahrstufenstellungen bewegen. Dabei folgen - wegen des unveränderten Eingriffs der ersten Sperrkontur 11 der Sperrwippe 6 mit dem Sperrnocken 12 am Wählhebel 1- sowohl die Sperrwippe 6, der Schwenkhebel 9, das Druckstück 17, der Seilzug 7 als auch die Getriebeschaltwelle bzw. der Getriebeaktuator 8 dieser manuellen Schwenkbewegung des Wählhebels 1.

Auf diese Weise wird die Parksperrenklinke im Getriebe somit wieder rein mechanisch über die Wirkungskette "Wählhebel, Sperrwippe, Schwenkhebel, Seilzug, Getriebeschaltwelle" ausgerückt, und das Fahrzeug kann somit wieder bewegt, beispielsweise abgeschleppt werden.

Im Ergebnis wird damit deutlich, dass mit der Erfindung eine Betätigungseinrichtung für Kraftfahrzeuggetriebe geschaffen wird, die gegenüber dem Stand der Technik insbesondere den Vorteil einer stets mit dem tatsächlichen Schaltzustand des Getriebes übereinstimmenden Wählhebelposition aufweist. Auf diese Weise ermöglicht die Erfindung eine für den Fahrer zuverlässige optische wie auch taktile Rückmeldung über den tatsächlichen Schaltzustand des Getriebes. Dabei lässt sich die zur selbsttätigen Bewegung des Wählhebels eingesetzte Vorrichtung auch ohne aufwändige elektromechanische Aktuatorik am Wählhebel realisieren sowie konstruktiv vorteilhaft zusätzlich auch als Wählhebelsperre und zudem auch als mechanische Notbetätigung für die Parksperre einsetzen.

Die Erfindung leistet somit einen maßgeblichen Beitrag zur Verbesserung von Ergonomie und Sicherheit im Bereich der Betätigungseinrichtungen für Kraftfahrzeuggetriebe, insbesondere bei anspruchsvollen Anwendungen im Bereich der Automatikgetriebe.

### Bezugszeichenliste

- 1: Wählhebel
- 2: Drehpunkt
- 3: Rastierung
- 4: Gehäusesockel
- 5: Drehpunkt
- 6: Sperrwippe
- 7: Seilzug, Kraftübertragungselement
- 8: Getriebeaktuator, Schaltwelle
- 9: Schwenkhebel
- 10: Drehpunkt
- 11: erste Sperrkontur
- 12: Sperrnocken
- 13: zweite Sperrkontur
- 14: Notentriegelungsklappe
- 15: Aktuator
- 16: Taster
- 17: Druckstück
- 18: Verriegelungshaken
- 19: Verriegelungsvorsprung
- 20: Schraubenfeder

## Patentansprüche

1. Betätigungseinrichtung zur Auswahl von Schaltstufen eines shift-by-wire-Gangwechselgetriebes, die Betätigungseinrichtung umfassend einen zwischen zumindest einer Fahrstufenstellung und einer Parksperrenstellung bewegbaren Wählhebel (1) mit stabilen Wählhebelstellungen sowie eine Sperrvorrichtung zur Sperrung des Wählhebels in der Parksperrenstellung,
wobei die Sperrvorrichtung (6, 7, 8, 9) eine Aktuatoreinrichtung (7, 8, 9) umfasst **dadurch gekennzeichnet, dass** der Wählhebel (1) mittels der die Aktuatoreinrichtung umfassenden Sperrvorrichtung aus einer Fahrstufenstellung in die Parksperrenstellung verbringbar ist, wobei die Aktuatoreinrichtung, (7. 8, 9) ein mechanisches Kraftübertragungselement (7) zwischen dem getriebeseitigen Aktuator (8) und dem Wählhebel (1) umfasst.

2. Betätigungseinrichtung nach Anspruch 1,
**dadurch gekennzeichnet,**
**dass** das mechanische Kraftübertragungselement als Seilzug (7) ausgebildet ist.

3. Betätigungseinrichtung nach Anspruch 1 oder 2,
**dadurch gekennzeichnet,**
**dass** die Betätigungseinrichtung eine Einrichtung zur mechanischen Notbetätigung des Gangwechselgetriebes umfasst, bei der die Kraftübertragung vom Wählhebel (1) auf das Gangwechselgetriebe über die Sperrvorrichtung (6, 7, 8, 9) mit der Aktuatoreinrichtung (7, 8, 9) erfolgt.

4. Betätigungseinrichtung nach einem der Ansprüche 1 bis 3,
**dadurch gekennzeichnet,**
**dass** die Sperrvorrichtung (6, 7, 8, 9) einen Aktuator (15) zur Freigabe des in der Parksperrenstellung gesperrten Wählhebels (1) umfasst.

5. Betätigungseinrichtung nach einem der Ansprüche 1 bis 4,
**dadurch gekennzeichnet,**
**dass** die Sperrvorrichtung (6, 7, 8, 9) eine um einen Drehpunkt (5) kippbare Sperrwippe (6) umfasst, wobei der Drehpunkt (5) der Sperrwippe (6) mittels eines Schwenkhebels (9) seinerseits schwenkbeweglich mit einem Sockel (4) der Betätigungseinrichtung verbunden ist, und wobei an einem Ende der Sperrwippe (6) eine mit dem Wählhebel (1) in Eingriff bringbare erste Sperrkontur (11) und am anderen Ende der Sperrwippe (6) eine mit der Notentriegelung (14) in Eingriff bringbare zweite Sperrkontur (13) angeordnet ist.

6. Betätigungseinrichtung nach Anspruch 5,
**dadurch gekennzeichnet,**
**dass** der Schwenkhebel (9) mit dem mechanischen Kraftübertragungselement (7) zwischen Gangwechselgetriebe und Wählhebel (1) verbunden ist.

7. Betätigungseinrichtung nach Anspruch 5,
**dadurch gekennzeichnet,**
**dass** der Schwenkhebel (9) ausgehend von seiner Betriebsstellung in Richtung auf seine Parksperrenstellung mittels eines Kraftspeichers (20) federbelastet ist, wobei der Schwenkhebel (9) bei im Gangwechselgetriebe ausgerückter Parksperre durch das mechanische Kraftübertragungselement (7) in seiner Betriebsstellung blockiert und bei im Gangwechselgetriebe eingerückter Parksperre durch das mechanische Kraftübertragungselement (7) nicht blockiert ist.

8. Betätigungseinrichtung nach Anspruch 7,
**gekennzeichnet durch**
eine manuell betätigbare Verriegelungseinrichtung (18, 19) zur Verbindung des mechanischen Kraftübertragungselements (7) und des Schwenkhebels (9).

## Claims

1. Actuating device for selecting shifting stages of a shift-by-wire change-speed gearbox, the actuating device comprising a selector lever (1) which can be moved between at least one driving position and a parking position and has stable selector lever settings and a blocking device for blocking the selector lever in the parking position,
wherein the blocking device (6, 7, 8, 9) comprises an actuator device (7, 8, 9), **characterized in that** the selector lever (1) can be moved out of a driving position to the parking position by means of the blocking device which comprises the actuator device, wherein the actuator device (7, 8, 9) comprises a mechanical force-transmitting element (7) between the gearbox-side actuator (8) and the selector lever (1).

2. Actuating device according to Claim 1,
**characterized**
**in that** the mechanical force-transmitting element is embodied as a Bowden cable (7).

3. Actuating device according to Claim 1 or 2,
**characterized**
**in that** the actuating device comprises a device for performing mechanical emergency actuation of the change-speed gearbox in which the transmission of force from the selector lever (1) to the change-speed gearbox takes place via the blocking device (6, 7, 8, 9) with the actuator device (7, 8, 9).

4. Actuation device according to one of Claims 1 to 3,
**characterized**
**in that** the blocking device (6, 7, 8, 9) comprises an actuator (15) for releasing the selector lever (1) which has been locked in the parking position.

5. Actuating device according to one of Claims 1 to 4,
**characterized**
**in that** the blocking device (6, 7, 8, 9) comprises a blocking rocker (6) which can tilt about a centre of rotation (5), wherein the centre of rotation (5) of the blocking rocker (6) is connected for its part by means of a swivel lever (9) to a pedestal (4) of the actuating device in such a way that it can move in a swivelling fashion, and wherein a first blocking contour (11) which can be placed in engagement with the selector lever (1) is arranged at one end of the blocking rocker (6) and a second blocking contour (13) which can be placed in engagement with the emergency release means (14) is arranged at the other end of the blocking rocker (6).

6. Actuating device according to Claim 5,
**characterized**
**in that** the swivel lever (9) is connected to the mechanical force-transmitting element (7) between the change-speed gearbox and the selector lever (1).

7. Actuating device according to Claim 5,
**characterized**
**in that** the swivel lever (9) is spring-loaded starting from its operating position in the direction of its parking position by means of a power accumulator (20), wherein when the parking blocking means is disengaged in the change-speed gearbox the swivel lever (9) is blocked in its operating position by the mechanical force-transmitting element (7), and when the parking blocking means is engaged in the change-speed gearbox the swivel lever (9) is not blocked by the mechanical force-transmitting element (7).

8. Actuating device according to Claim 7,
**characterized by**
a manually actuable locking device (18, 19) for connecting the mechanical force-transmitting element (7) and the swivel lever (9).

## Revendications

1. Dispositif d'actionnement pour sélectionner des rapports de changement de vitesse d'une transmission à changement de vitesse à système de transmission par câble, le dispositif d'actionnement comprenant un levier de sélection (1) déplaçable entre au moins une position de conduite et une position de verrouillage de stationnement avec des positions de levier de sélection stables ainsi qu'un dispositif de verrouillage pour le verrouillage du levier de sélection dans la position de verrouillage de stationnement,
le dispositif de verrouillage (6, 7, 8, 9) comprenant un dispositif d'actionneur (7, 8, 9), **caractérisé en ce que** le levier de sélection (1) peut être amené d'une position de conduite dans la position de verrouillage de stationnement au moyen du dispositif de verrouillage comprenant le dispositif d'actionneur, le dispositif d'actionneur (7, 8, 9) comprenant un élément de transfert de force mécanique (7) entre l'actionneur (8) du côté de la transmission et le levier de sélection (1).

2. Dispositif d'actionnement selon la revendication 1,
**caractérisé en ce que**
l'élément de transfert de force mécanique est réalisé sous forme de câble Bowden (7).

3. Dispositif d'actionnement selon la revendication 1 ou 2,
**caractérisé en ce que**
le dispositif d'actionnement comprend un dispositif pour l'actionnement d'urgence mécanique de la transmission à changement de vitesse, dans lequel le transfert de force du levier de sélection (1) à la transmission à changement de vitesse a lieu par le biais du dispositif de verrouillage (6, 7, 8, 9) avec le dispositif d'actionneur (7, 8, 9).

4. Dispositif d'actionnement selon l'une quelconque des revendications 1 à 3,
**caractérisé en ce que**
le dispositif de verrouillage (6, 7, 8, 9) comprend un actionneur (15) pour libérer le levier de sélection (1) verrouillé dans la position de verrouillage de stationnement.

5. Dispositif d'actionnement selon l'une quelconque des revendications 1 à 4,
**caractérisé en ce que**
le dispositif de verrouillage (6, 7, 8, 9) comprend une bascule de verrouillage (6) pouvant basculer autour d'un pivot (5), le pivot (5) de la bascule de verrouillage (6) étant connecté au moyen d'un levier pivotant (9) pour sa part de manière pivotante à un socle (4) du dispositif d'actionnement, et à une extrémité de la bascule de verrouillage (6) étant disposé un premier contour de verrouillage (11) pouvant être amené en prise avec le levier de sélection (1) et à l'autre extrémité de la bascule de verrouillage (6) étant disposé un deuxième contour de verrouillage (13) pouvant être amené en prise avec le déverrouillage d'urgence (14).

6. Dispositif d'actionnement selon la revendication 5,
**caractérisé en ce que**
le levier pivotant (9) est connecté à l'élément de transfert de force mécanique (7) entre la transmission à changement de vitesse et le levier de sélection (1).

7. Dispositif d'actionnement selon la revendication 5,
**caractérisé en ce que**
le levier pivotant (9) est sollicité par ressort à partir de sa position de fonctionnement dans la direction de sa position de verrouillage de stationnement au moyen d'un accumulateur de force (20), le levier pivotant (9), lorsque le verrouillage de stationnement est débrayé dans la transmission à changement de vitesse, étant bloqué dans sa position fonctionnelle par l'élément de transfert de force mécanique (7) et, lorsque le verrouillage de stationnement est embrayé dans la transmission à changement de vitesse, n'étant pas bloqué par l'élément de transfert de force mécanique (7).

8. Dispositif d'actionnement selon la revendication 7,
**caractérisé par**
un dispositif d'immobilisation à commande manuelle (18, 19) pour connecter l'élément de transfert de force mécanique (7) et le levier pivotant (9).
